# EUROPEAN PATENT APPLICATION

(11) **EP 1 746 599 A1**
(43) Date of publication of application: **24.01.2007**
(21) Application number: 06253691.7
(22) Date of filing: 14.07.2006
(51) Int. Cl.: G11B 27/34, G11B 27/034, G11B 27/36, H04N 5/76, G11B 27/32

(54) **A display apparatus for automatically classifying recorded programs and method thereof**

(30) Priority: 19.07.2005 KR 20050065405
(71) Applicant: LG Electronics Inc., Yongdungpo-gu Seoul (KR)
(72) Inventor: Kim, In Hoon, Daegu (KR); Jang, Hae Won, Daegu (KR)
(74) Representative: Camp, Ronald

(57) **Abstract**

A display device for automatically classifying a program to be stored comprises a decoder for decoding transport streams of the program to be stored and retrieving a rating information of the program to be stored during the decoding, a storage means for storing the program and the rating information of the program, and a controller for automatically storing the program according to the rating information. Also, a method for automatically classifying a program to be stored comprises decoding transport streams of the program to be stored, retrieving a rating information of the program to be stored during the decoding, and automatically storing the program according to the rating information.

## Description

The present invention relates to a display device. It more particularly relates to a display device for automatically classifying recorded programs and method thereof.

Heretofore every recorded program has been stored on a storage area without any classification. If a user wanted to organize recorded programs by genre and/or rating, the user has had to manually create folders and move the recorded programs to the corresponding folders. Also, every folder including recorded programs has been accessible to every person who wanted to see it without any restrictions.

Therefore, it is highly desired to develop a display device for automatically classifying recorded programs which avoid the need for manually classifying recorded programs and prevent access by a person who doesn't have the right to see it.

The present invention seeks to provide an improved display device for automatically classifying programs and a method of operation thereof.

Embodiments of the present invention can provide a more convenient user interface for the user by automatically classifying recorded programs according to rating information.

Additional advantages and features of the invention will be set forth in part in the description which follows.

In accordance with a first aspect of the invention, a display device for automatically classifying a program to be stored comprises a decoder arranged to decode transport streams of the program to be stored and to retrieve rating information of the program to be stored during the decoding, a storage means arranged to store the program and the rating information of the program, and a controller arranged to automatically store the program according to the rating information.

Another aspect of the invention provides a method for automatically classifying a program to be stored is provided that comprises decoding transport streams of the program to be stored, retrieving rating information of the program to be stored during the decoding, and automatically storing the program according to the rating information.

It is to be understood that both the foregoing general description and the following detailed description of the present invention are exemplary and explanatory and are intended to provide further explanation of the invention as claimed.

Exemplary embodiments of the invention will now be described by way of non-limiting example only, with reference to the drawings, in which:

FIG. 1 illustrates a block diagram of a display device having an automatic classifying function of recorded programs;

FIG. 2 illustrates a display screen which shows a list of folders for recorded programs;

FIG. 3 illustrates a display screen which shows a list of folders for recorded programs with an "Other' folder;

FIG. 4 illustrates a display screen which shows configuration of the automatic classifying function;

FIG. 5 illustrates a display screen which shows a list of folders for recorded programs without displaying restricted folders; and

FIG. 6 illustrates a flowchart illustrating the method steps of automatically classifying recorded programs.

Wherever possible, the same reference numbers will be used throughout the drawings to refer to the same or like parts.

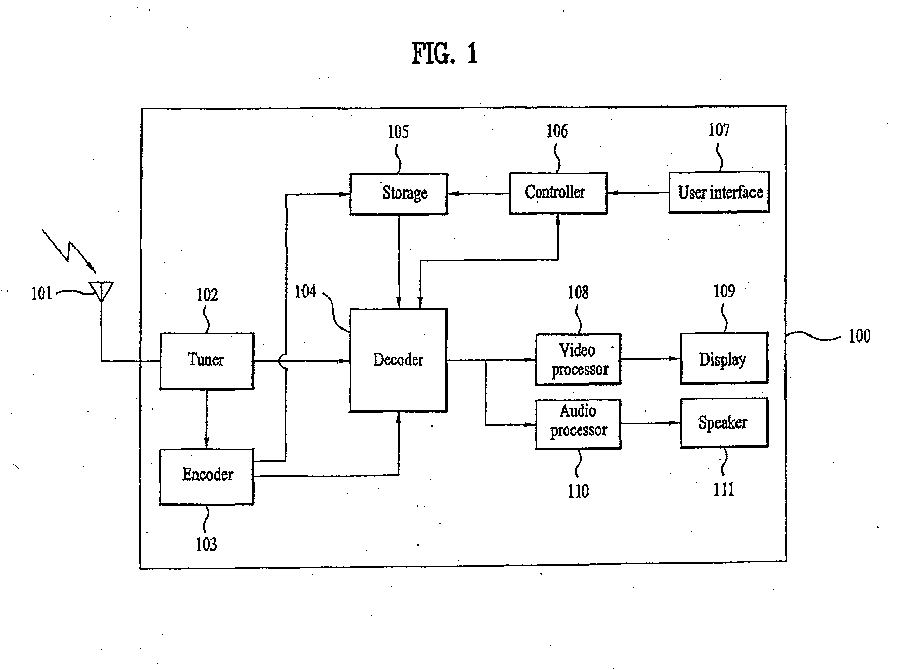

FIG. 1 shows a display device (100) having an automatic classifying function of recorded programs. An antenna (101) receives specific broadcast signals in a tuned frequency range. The tuner (102) demodulates IF signals from the received broadcast signals. The encoder (103) converts analog signals from the antenna (101) to digital signals.

The decoder (104) decodes signals in the form of transport streams to further process at the video processor (108) or the audio processor (110). Also, the decoder (104) retrieves the rating information from the received broadcast signals. In the present embodiment the decoder (104) includes a system decoder, a video signal decoder and an audio signal decoder.

The rating information includes the Genre Descriptor according to the Program and System Information Protocol (PSEP) standard from the Advanced Television System Committee (ATSC). The Genre Descriptor provides genre, program type or category information for programs. However, the rating information is not limited to the PSIP standard, but includes any genre information contained in the broadcast signals.

The storage (105) stores the broadcast signals and the retrieved rating information. The controller (106) decides which signals are stored at the storage (105) and which signals are retrieved from the storage (105). The user interface (107) provides specific commands from the user. The user interface (107) includes any kinds of user inputs such as keypad, mouse and remote control. The display (109) displays signals from the video processor (108) and the speaker (111) outputs the signals from the audio processor (110).

Operations of automatically classifying recorded programs using the rating information will now be explained. After a user has input a command to record a specific program, the controller (106) controls the decoder (104) and the storage (105) to store the specific program at the storage (105). The decoder (104) retrieves the rating information while recording the specific program.

The controller (106) then controls the storage (105) to store the specific program at a folder corresponding to the rating information. For example, if the rating information of a program is "movie," the program is stored at a folder named "movie." The controller (106) creates a new folder if the folder corresponding to the rating information does not exist.

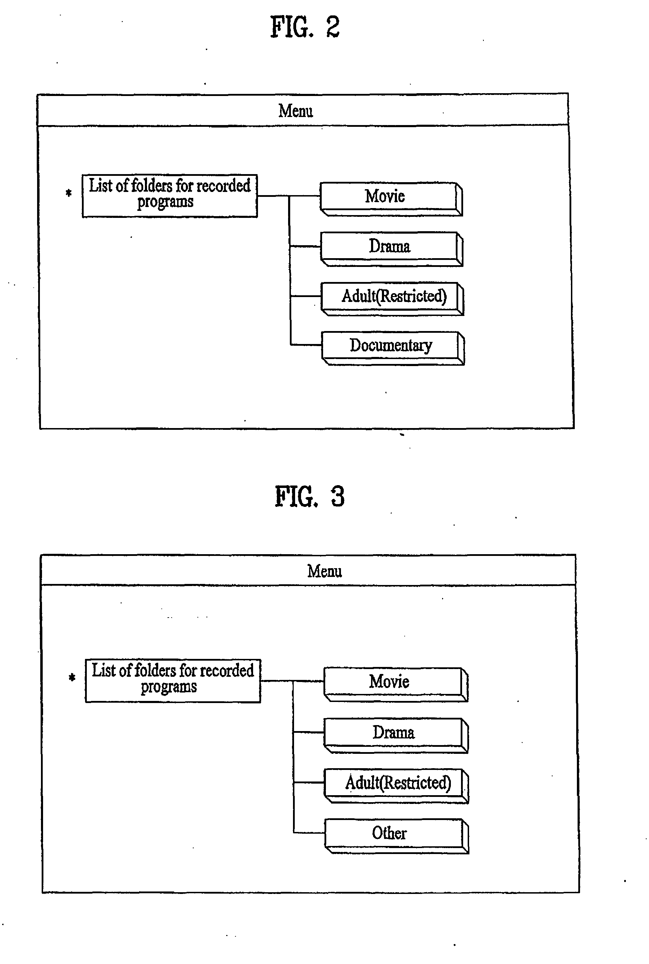

FIG. 2 and FIG. 3 illustrate a display screen which shows a list of folders for recorded programs. When the rating information of a program shows that the genre is "documentary" but there is no "documentary" folder, the controller (106) creates a folder named "documentary" as shown in FIG. 2 or creates a folder named "other" as shown in FIG. 3 to temporarily store the "documentary" program at the "other" folder.

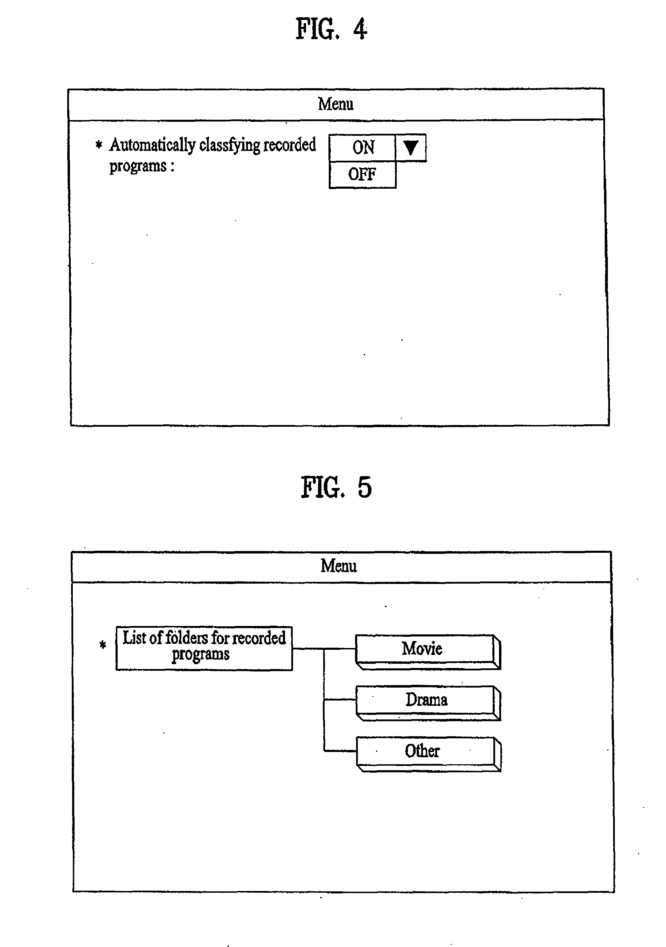

FIG. 4 illustrates a display screen which shows the configuration of the automatic classifying function. The automatic classifying function can be turned on and off as a user wants. When the automatic classifying function is on, the display device (100) automatically classify recorded programs corresponding to the rating information. When the user wants to differently classify recorded programs than the automatic classification of the display device, the user also can turn off the automatic classifying function.

Moreover, the user can create one or more restricted folders and set up a password for objectionable or sensitive programs such as sex, violence, strong language and nudity. When the restricted folders are created, the controller (106) controls the display (109) not to display the restricted folders as shown in FIG. 5.

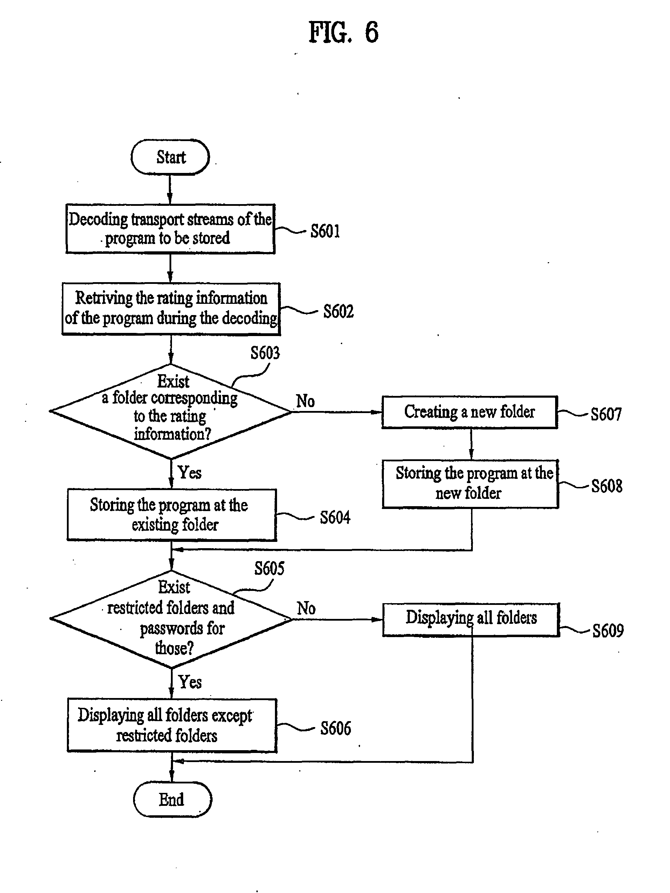

FIG. 5 illustrates a display screen which shows a list of folders for recorded programs without displaying restricted folders. For example, if the list of folders for recorded programs includes "movie," "drama," "adult" and "other" as shown in FIG. 3 and the "adult" folder is restricted by the user, the controller (106) controls the display (109) not to display the "adult" folder as shown in FIG. 6. When the correct password is inputted from the user, the controller displays all folders stored at the storage (105).

FIG. 6 illustrates a flowchart illustrating the method steps of automatically classifying recorded programs.

First of all, the decoder (104) decodes transport streams of the program to be stored (S601) and retrieves a rating information of the program to be stored during the decoding (S602). The controller (106) determines whether a folder corresponding to the rating information exists (S603). If the folder corresponding to the rating information exists, the controller stores the program at the existing folder (S604). If the folder corresponding to the rating information does not exist, the controller (S604) creates a new folder and stores the program at the new folder.

After that, the controller determines whether one or more restricted folders exist. If there is a restricted folder, the controller controls the display to display all folders except the restricted folder. If there is no restricted folder, the controller controls the display to display all folders.

While exemplary embodiments of the invention have been described, it will be apparent to those skilled in the art that various modifications and variations of the present invention can be made without departing from the scope of the invention. Thus, it is intended that the present invention covers the modifications and variations of this invention provided they come within the scope of the appended claims.

## Claims

1. A display device for automatically classifying a program to be stored comprising:
a decoder arranged to decode transport streams of the program to be stored and to retrieve rating information of the program to be stored during the decoding;
a storage means arranged to store the program and the rating information of the program; and
a controller arranged to automatically store the program according to the rating information.

2. The display device of claim 1, wherein the controller is arranged to create a new folder and to store the program in the new folder if a folder corresponding to the rating information does not exist.

3. The display device of claim 1 or 2, further comprising a display arranged to display the program corresponding to the rating information.

4. The display device of claim 1, 2 or 3 further comprising a user input arranged to configure restricted folders or to input a password.

5. The display device of claim 4, wherein the controller is arranged to prevent restricted folders from being displayed until the password is entered.

6. A method for automatically classifying a program to be stored comprising:
decoding transport streams of the program to be stored;
retrieving a rating information of the program to be stored during the decoding; and
automatically storing the program according to the rating information.

7. The method of claim 6, further comprising determining whether a folder corresponding to the rating information already exists.

8. The method of claim 7, further comprising storing the program at the folder if the folder already exists.

9. The method of claim 7, further comprising creating a new folder if the folder corresponding to the rating information does not exist.

10. The method of claim 9, further comprising storing the program in the new folder.

11. The method of any one of claims 6 to 10, further comprising determining whether a restricted folder or a password is configured.

12. The method of claim 11, further comprising displaying all folders except the restricted folder if the restricted folder or the password is configured.

13. The method of claim 11, further comprising displaying all folders if the restricted folder or the password is not configured.
